Europäisches Patentamt

**European Patent Office**

Office européen des brevets

(11) Publication number: **0 200 914 B1**

# EUROPEAN PATENT SPECIFICATION

(45) Date of publication of patent specification: **07.08.91**

(51) Int. Cl.5: **C08K 3/08, G02B 6/44**

(21) Application number: **86104387.5**

(22) Date of filing: **01.04.86**

The file contains technical information submitted after the application was filed and not included in this specification

(54) **Hydrogen absorbing composition for optical-fibres cables, and cables and their components incorporating the said composition.**

(30) Priority: **12.04.85 IT 2031085**

(43) Date of publication of application:
**17.12.86 Bulletin 86/46**

(45) Publication of the grant of the patent:
**07.08.91 Bulletin 91/32**

(84) Designated Contracting States:
**AT BE CH DE FR GB LI LU NL SE**

(56) References cited:
**EP-A- 0 069 363**
**EP-A- 0 107 433**
**EP-A- 0 133 873**
**FR-A- 2 024 359**
**GB-A- 2 144 559**

**H.G. ELIAS, Makromoleküle, 1984, 474 Edition p. 1010 and 1011**

(73) Proprietor: **PIRELLI CAVI S.p.A.**
**Piazzale Cadorna, 5**
**I-20123 Milan(IT)**

(72) Inventor: **Secco, Alessandro**
**Via Roma, 118**
**Bareggio (Milan)(IT)**
Inventor: **Anelli, Pietro**
**Via L. della Pila, 61**
**Milan(IT)**
Inventor: **Pasini, Franco**
**Via Carroccio, 16**
**Milan(IT)**

(74) Representative: **Sirtori, Giorgio et al**
**Pirelli S.p.A. Direzione Brevetti Piazzale**
**Cadorna, 5**
**I-20123 Milano(IT)**

## Description

The present invention refers to an absorbent hydrogen composition for optical fibres telecommunications cables.

The present invention also refers to cables and to their components - which incorporate the said composition, in any whatsoever form.

Hydrogen is harmful for optical fibres cables - no matter of what type they may be - since, should the optical-fibres come into contact with the hydrogen, serious drawbacks could arise - such as, for example, the mechanical degradation of the optical fibres and also an attenuation of the signals transmitted, precisely in the ranges of the wave-lengths used for the telecommunications.

Hydrogen can reach a cable - either by being originated in the outside environment, or else, it can be originated from inside the cable itself.

The hydrogen can be formed inside of a cable - for example, through an electro-chemical phenomena taking place with water in correspondence of the metallic components - made, for example, of galvanized steel, or of aluminium alloys of the above-defined type of cable, or else, through the chemical reaction which takes place between water and the plastic materials out of which other cable components are made.

Another cause of hydrogen forming inside a cable, is through its being emitted by the materials themselves - out of which the cable is constituted, which have absorbed hydrogen during their manufacturing process.

Whereas the quantity of hydrogen which can be originated inside a cable is small, the same cannot be stated with regard to the quantity of hydrogen that reaches a cable from the outside environment. Consider, for example, the great quantities of hydrogen that can be formed in particular ambients for example, in thermo-nuclear plants; or else, in connection with the underwater equipment - provided with cathodic protections - such as platforms for submarine perforations, petroliferous pipelines, and such like.

GB-A- 21 44 559 discloses optical cables containing hydrogen absorbing materials such as palladium, unsaturated or aromatic hydrocarbons, polybutene or activated carbon black.

In the ITALIAN PATENT APPLICATION No. 23 729 A/84 - by the same Applicant, there is described a composition based upon unsaturated siliconic compounds acting as 'fillers' for optical fibres cables, which are apt for chemically absorbing all and any traces of hydrogen - with in this way preventing this from reaching the optical fibres.

The composition, according to the Italian Patent Application, is very efficaciously capable of protecting the optical fibres of a cable, from a quantity of hydrogen in the same order of magnitude as the hydrogen emitted from the materials out of which a cable is formed.

Instead, said composition does not appear to give a satisfactory protection in instances when an optical fibres cable is disposed in an ambient saturated with hydrogen.

The aim of the present invention is to provide a protection against any damages taking place to cables - as caused by the hydrogen.

In particular, the aim of the present invention is a protection that - in chemically blocking the hydrogen within itself, results capable of acting as a protective barrier for the optical fibres of a cable against both, the hydrogen that can be formed inside the cable itself - as well as that coming, in large quantities, from the environment outside the cable.

The object of the present invention is a hydrogen absorbing composition for optical fibres cables and their components, formed by a mixture that comprises an unsaturated polymer, characterised in that the unsaturated polymer is selected from:

- unsaturated homopolymers obtained through the polymerisation of monomers selected from butadiene, pentadiene, mhetylbutadiene and 2-chlorobutadiene;
- unsaturated copolymers or terpolymers obtained through the polymerisation between a first monomer, selected from butadiene, pentadiene, methylbutadiene and 2-chlorobutadiene, and a second monomer, or second and third monomers, selected from styrene, 4-vinylpyridine and acrylonitrile; and
- unsaturated polymers obtained by grafting to the unsaturated homopolymers or to the unsaturated copolymers or terpolymers, monomers containing at least one unsaturated group, selected from vinyl, allyl, and mixtures thereof, said monomers containing at least one unsaturated group after the grafting step;

and the mixture comprises further a catalyst selected from palladium powder, platinum powder, iron pentacarbonyl, copper chromite and mixtures of two or more thereof, by itself or supported by inert materials.

In this composition the unsaturated homopolymer can have all the component monomers which are linked to one another at the 1 and 4 positions or linked to one another at the 1 and 2 positions.

2

Another object of the present invention is an optical fibres cable, having at least one mechanically resistant component, and comprising a transmissive unit and a sheath enclosing the transmissive unit, characterised by the fact of incorporating an unsaturated polymeric composition made from a mixture comprising an unsaturated polymer selected from:

- unsaturated homopolymers obtained through the polymerisation of monomers selected from butadiene, pentadiene, methylbutadiene and 2-chlorobutadiene;
- unsaturated copolymers or terpolymers obtained through the polymerisation between a first monomer, selected from butadiene, pentadiene, methylbutadiene and 2-chlorobutadiene, and a second monomer, or second and third monomers, selected from styrene, 4-vinylpyridine and acrylonitrile; and
- unsaturated polymers obtained by grafting to the unsaturated homopolymers or to the unsaturated copolymers or terpolymers, monomers containing at least one unsaturated group, selected from vinyl, allyl and mixtures thereof, said monomers containing at least one unsaturated group after the grafting step;

and a catalyst selected from palladium powder, platinum powder, iron pentacarbonyl, copper chromite and mixtures of two or more thereof, by itself or supported by inert materials.

In the cable the mechanically resistent component is a metallic armouring outside the sheath which encloses the transmissive unit, and at least one structural shape, made of polymeric compound, wherein the unsaturated polymeric composition is incorporated, is adjacent to the components of the metallic armouring, or a covering made of a polymeric compound, containing at last the unsaturated polymeric composition, covers at least some components of the metallic armouring of the cable.

In an alternative embodiment of the cable the mechanically resistant component is the metallic sheath that encloses the transmissive unit and a covering, of a polymeric compound containing at least the unsaturated polymeric composition, lines the sheath.

In the cable the unsaturated polymeric composition is placed near the optical fibre, at a distance of not over 1 cm; preferably the unsaturated polymeric composition, disposed in the vicinity of the optical fibres, at least partially surrounds these latters.

The unsaturated polymeric composition surrounding the optical fibres is at least a component of a filler for the cable or is at least a component of a plastic compound, out of which a tube is formed that loosely houses the said optical fibres, even singly.

Said transmissive unit of the cable comprises, in a central position, at least one structural shape made of a plastic compound of which at least the unsaturated composition is a component.

A further object of the present invention is an optical fibres cable component, incorporating a hydrogen absorbent composition formed by a mixture that comprises an unsaturated polymer, characterised in that the unsaturated polymer is selected from:

- unsaturated homopolymers obtained through the polymerisation of monomers selected from butadiene, pentadiene, methylbutadiene and 2-chlorobutadiene;
- unsaturated copolymers or terpolymers obtained through the polymerisation between a first monomer, selected from butadiene, pentadiene, methylbutadiene and 2-chlorobutadiene, and a second monomer, or second and third monomers, selected from styrene, 4-vinylpyridine and acrylonitrile; and
- unsaturated polymers obtained by grafting to the unsaturated homopolymers or to the unsaturated copolymers or terpolymers, monomers containing at least one unsaturated group, selected from vinyl, allyl, and mixtures thereof, said monomers containing at least one unsaturated group after the grafting step;

and the mixture comprises further a catalyst selected from palladium powder, platinum powder, iron pentacarbonyl, copper chromite and mixtures of two or more thereof, by itself or supported by inert materials.

Preferably the optical fibres cable component consists of a plastic structural shape that incorporates at least the hydrogen absorbent composition.

In the optical fibres cable component, the structural shape is a tube, inside which at least one optical fibre is housed.

The optical fibres cable component, according to the invention, constituted by a filler in the form of powders and/or of a fluid - even viscous, is also characterized by the fact of comprising the hydrogen absorbing composition.

Examples of homopolymers - that are apt for forming the first component of the mixture are: polybutadiene 1,4; polybutadiene 1,2; polybutadiene 1,4 - 1,2; polyisoprene, natural rubber and polychloroprene.

Should the unsaturated polymer be a copolymer - this is obtained, preferably, but not exclusively, through polymerization - between a first monomer, selected from among: butadiene, pentadiene, metyl-

3

butadiene, 2-chlorobutadiene and a second monomer, selected from among: styrene, 4-vinyl-pyridine and acrylonitrile.

Examples of copolymers apt for forming the first component of a mixture according to the invention, are: the butadiene-styrene copolymer and the butadiene-acrylonitrile copolymer.

When the unsaturated polymer is a terpolymer, this is obtained - preferably, but not exclusively, through the polymerization of styrene, of 4-vinylpyridine, of acrylonitrile and of a third monomer - selected from butadiene, pentadiene, methylbutadiene and 2-chlorobutadiene.

An example of a terpolymer that is apt for forming the first component of a compound according to the invention, is a terpolymer butadiene-styrene-acrylonitrile.

An example of a grafted unsaturated polymer that is apt for forming the first component of a mixture, according to the invention, is butadiene-styrene, grafted with divinylsulphone - and obtained through the means of a radical initiator, using methods that are per se known to those skilled in the art.

The other essential component of the mixture forming the composition of the present invention, is a catalyst - selected from platinum powder, palladium powder, iron pentacarbonyl, and copper chromite - that are either utilized as such, or else, supported by inert materials - such as, for example: animal black, or vegetable black, known to those skilled in the art, under the name of "charcoal".

The mixture, forming the absorbent hydrogen composition - according to the invention, can either be in a liquid state, or in a solid state.

Moreover, said mixture can either be used as such, or else, substances that are non-reactive to hydrogen can be added to it - in all those situations requiring this, and which is a common technical knowledge to anyone skilled in the art, for permitting the introduction of the mixture into a cable.

However, if inert substances be present in the mixture, it is essential for the latter to always be capable of chemically blocking all the hydrogen that can reach the optical-fibres of a cable, or else, be formed inside it.

The one skilled in the art, is capable of determining - for each cable, the quantity of hydrogen in play. Once this quantity has been determined, he is able to establish - for each possible composition, according to the invention (and without any specific instructions), the minimum quantity of unsaturated polymer, on the basis of his knowledge of the stoichiometry and of the kinetics of the hydrogenization - of the unsaturated groups contained in the selected polymer.

There will now be given, solely by way of example, some particular embodiments of compositions, according to the invention, either in a liquid, or in a solid state; the results of experimental tests, as well as their modality of execution - concerned with the compositions in question, that show the capacity of these compositions to absorb, at ambient temperature, both traces as well as large quantities of hydrogen.

## EXAMPLE 1

The absorbent hydrogen composition of this example is in a liquid state and its recipe is as follows:
- 100 parts by weight of polybutadiene 1,2 - 1,4 having a molecular weight of 1800 and containing 80% of butadiene units 1,2 and 20% of butadiene units 1,4.
- 0,3 parts by weight of coal powder containing 5% of palladium, the latter being constituted by granules having dimensions of less than 40 $\mu$m.

## EXAMPLE 2

The absorbent hydrogen composition of this example is in a liquid state and its recipe is as follows:
- 100 parts by weight of butadiene-styrene copolymer, having a molecular weight of 3400 and containing 25% of styrene units, 15% of butadiene units 1,2 and 60% of butadiene units 1,4.
- 0,3 parts by weight of coal powder containing 5% of palladium, the latter being constituted by granules having dimensions of less than 40 $\mu$m.

## EXAMPLE 3

The absorbent hydrogen composition of this example is in a liquid state and its recipe is as follows:
- 100 parts by weight of terpolymer butadiene-styrene-acrylonitrile having a molecular weight of 2500 and containing 10% of styrene units, 25% of acrylonitrile units, 52% of butadiene units 1,2 and 13% of butadiene units 1,4.
- 0,3 parts by weight of carbon powder containing 5% of palladium - the latter being constituted by granules having dimensions of less than 40 $\mu$m.

EXAMPLE 4

The absorbent hydrogen composition of this example is in a liquid state and its recipe is as follows:
- 100 parts be weight of butadiene styrene divinylsulphone, having a molecular weight of 13750 and containing 43% of butadiene units 1,4 and 37% of styrene units and 20% of divinyl-sulphone units;
- 0,3 parts by weight of copper chromite powder - whose granules have dimensions of less than 40 $\mu$m.

EXAMPLE 5

The absorbent hydrogen composition of this example is in a solid state and its recipe is as follows:
- 100 parts by weight of polybutadiene 1,2 - 1,4 having a molecular weight of 246.000 and containing 77% of butadiene units 1,2 and 23% of butadiene units 1,4;
- 0.3 parts by weight of carbon powder containing 5% of palladium, the latter being constituted by granules with dimensions of less than 40 $\mu$m.

EXAMPLE 6

The absorbent hydrogen composition of this example is in a solid state and its recipe is as follows:
- 100 parts by weight of butadiene-styrene copolymer having a molecular weight of 400,000 and containing 23% of styrene units and 77% of butadiene units - of which 90% is butadiene 1,2;
- 0,3 parts by weight of carbon powder containing 5% of palladium, the latter being constituted by granules with dimensions of less than 40 $\mu$m.

EXAMPLE 7

The absorbent hydrogen composition of this example is in a solid state and its recipe is as follows:
- 100 parts by weight cf terpolymer butadiene-styrene-acrylonitrile having a molecular weight of 10,500 and containing 25% of butadiene units 1,2 50% of styrene and 25% of acrylonitrile units;
- 0,5 parts by weight of copper-chromite powder - whose granules have dimensions of less than 40 $\mu$m.

EXAMPLE 8

The absorbent hydrogen composition of this example is in a solid state and its recipe is as follows:
- 100 parts by weight of butadiene-styrene-divinylsulphone having a molecular weight of 140.000 and containing 43% of butadiene units 1,4 and 37% of styrene units and 20% of divinylsulphone units;
- 0,3 parts by weight of copper-chromite powder whose granules have dimensions of less than 40 $\mu$m.

EXAMPLE 9

The absorbent hydrogen composition of this example is a compound in a substantially solid state, and its recipe is as follows:

```
- polybutadiene 1,2  ................. 100 parts by weight
- carbon powder containing 5% of palladium, the latter being constituted by
  granules having dimensions of less
  than 40 μm  ....................... 0,3  "    "    "
- plasticising mineral oil
  (for example: paraffin oil)  .......... 50    "    "    "
- mineral fillers
  (for example: calcium carbonate) ..... 100    "    "    "
```

5

The formation of the above-stated compositions has been obtained in the following manner. The compositions, in a liquid state, have been formed by uniformly dispersing the catalyst in the liquid polymer - through the means of mechanical agitation.

The compositions, in a solid state, are obtained through treating the ingredients of the said compositions, in a mechanical mixer - of the per se known type, used for producing compounds.

Experimental tests were carried out - with all the compositions of the above examples, for determining the absorption capacities of hydrogen.

The modalities of execution, of the experimental tests, for determining the hydrogen-absorption capacity of the compositions according to the invention, are as follows.

The equipment utilized, comprises a glass ampoule of $175cm^3$, from which there sealingly branches off a glass-tube, that terminates in a two-way tap - one of whose outlets is connected to a vacuum-pump, while the other is connected to a phiol containing hydrogen.

A mercury gauge is inserted in the intermediate position of the tube.

In the case of compositions in a liquid state (examples from 1 to 4), 1 gr of these was smeared on the walls of the ampoule - with adding, whenever necessary, a silica gel - merely for increasing the viscosity of the composition and for allowing the same to adhere to the ampoule wall.

In the case of the compositions in a solid state (examples from 5 to 9) a rectangular film of 1 gr - having sides of 330 mm and 30 mm, was introduced into the ampoule.

After the introduction of a sample of the composition into the ampoule, the latter was sealed tight - and successively, by means of the pump, a barometrical vacuum was created inside it, with verifying the achievement of the same - by means of the mercury gauge.

At this point, the pump was excluded, and the ampoule was made to communicate with the phial containing the hydro- gen - so that the latter can flow into the ampoule itself - and come into contact with, and react chemically to the composition contained therein.

The tests were carried out at a temperature of 20$^\circ$ C, with providing for introducing into the ampoule prefixed quantities of hydrogen, measured on the basis of the pressure of the hydrogen inside said ampoule - and with noting, as a function of the time, the course of the pressure reduction in the ampoule.

In particular, there were effectuated two tests - with using different initial quantities of hydrogen, introduced into the ampoule.

The first test was carried out by introducing, into the ampoule, hydrogen at a pressure of 1 bar (760mm of mercury) - corresponding to a quantity of 0,152 gr of hydrogen - corresponding to 160 normal $cm^3$ of hydrogen.

The second test was effectuated by introducing hydrogen into the ampoule at a pressure of 0.26 bar (200mm of mercury) - corresponding to a quantity of $0,38 \times 10^{-2}$ gr of hydrogen - corresponding to 48,6 normal $cm^3$ of hydrogen.

In each test, the pressure of hydrogen was determined after 360 hours. The corresponding quantity of hydrogen was then calculated - expressed in normal $cm^3$ , that was chemically absorbed by 1 gr of the composition.

The results of the two experimental tests are given in the
TABLES I and II

=================================================================
| TABLE I (Results of the First Experimental Test) |
=================================================================

| EXAMPLES of COMPOSITIONS | PRESSURE of HYDROGEN in AMPOULE after 360 HOURS in bar (mm of MERCURY) | QUANTITY in normal $cm^3$ of the HYDROGEN ABSORBED after 360 HOURS - by 1 gr of the COMPOSITION |
|---|---|---|
| 1 | 0 (0) | 160 |
| 2 | 0.625 (475) | 60 |
| 3 | 0 (0) | 160 |
| 4 | 0.482 (366) | 83 |
| 5 | 0 (0) | 160 |
| 6 | 0 (0) | 160 |
| 7 | 0.375 (285) | 100 |
| 8 | 0.482 (366) | 83 |
| 9 | 0.205 (156) | 127 |

=================================================================

=================================================================
| TABLE II (Results of the Second Experimental Test) |
=================================================================

| EXAMPLES of COMPOSITIONS | PRESSURE of HYDROGEN in AMPOULE after 360 HOURS in bar (mm of MERCURY) | QUANTITY in normal $cm^3$ of the HYDROGEN ABSORBED after 360 HOURS - by 1 gr of the COMPOSITION |
|---|---|---|
| 1 | 0 (0) | 48.6 |
| 2 | 0 (0) | 48.6 |
| 3 | 0 (0) | 48.6 |
| 4 | 0 (0) | 48.6 |
| 5 | 0 (0) | 48.6 |
| 6 | 0 (0) | 48.6 |
| 7 | 0 (0) | 48.6 |
| 8 | 0 (0) | 48.6 |
| 9 | 0 (0) | 48.6 |

=================================================================

The results appearing in TABLE I, point out that the compositions taken from EXAMPLES from 1 to 9 (1 gr in quantity and at room temperature), are capable of absorbing a really specific quantity of hydrogen.

The compositions 1, 3, 5, 6 - absorbed the entire quantity of hydrogen used during the test - while the other remaining compositions only absorbed a part of said hydrogen; by proportionately augmenting the weight of the compositions 2, 4, 7, 8 and 9 - the total absorption of the hydrogen can be obtained.

As regards the results shown in TABLE II - all of the compositions have absorbed the entire total of the hydrogen used in the test.

Hence, the tests demonstrate that the compositions - according to the invention, are apt for realizing an efficient barrier against any diffusion of large quantities (TABLE I) and small quantities (TABLE II) of hydrogen - and therefore, when they are introduced into the optical-fibres cables, no matter in what manner this is effectuated, they are capable of protecting the said fibres against the action of hydrogen,

As previously stated, what also enter within the ambit of the present invention, are cables incorporating, in any whatsoever way, the absorbent hydrogen compositions - according to the present invention.

In the attached figures, there are shown, solely by way of non-limiting examples, some embodiments for cables, in particular:

FIG. 1 - schematically shows a perspective view of a length of cable - according to the invention, that is provided with a metallic armouring surrounding the sheath;

FIG. 2 - schematically shows a cross-section of an optical fibres cable - according to the invention;

FIG. 3 - schematically shows a perspective view of an alternative embodment for an optical fibres cable - according to the invention.

FIG. 4 - shows a perspective view of a portion of an optical fibres cable component, according to the invention.

A mechanically-resistent element, is present in all kinds of optical fibres cables. In this text, by the term: "mechanically-resistent element" is meant, either an element such as, for example, an armouring - whose sole purpose is to resist mechanical stresses, or else, any whatsoever component part of the cable, that besides performing its intended function, also proves apt for acting as a mechanically-resisting element - such as, for example, the sheath, the tubes lodging optical fibres, and a structural shaped provided with grooves for housing optical fibres.

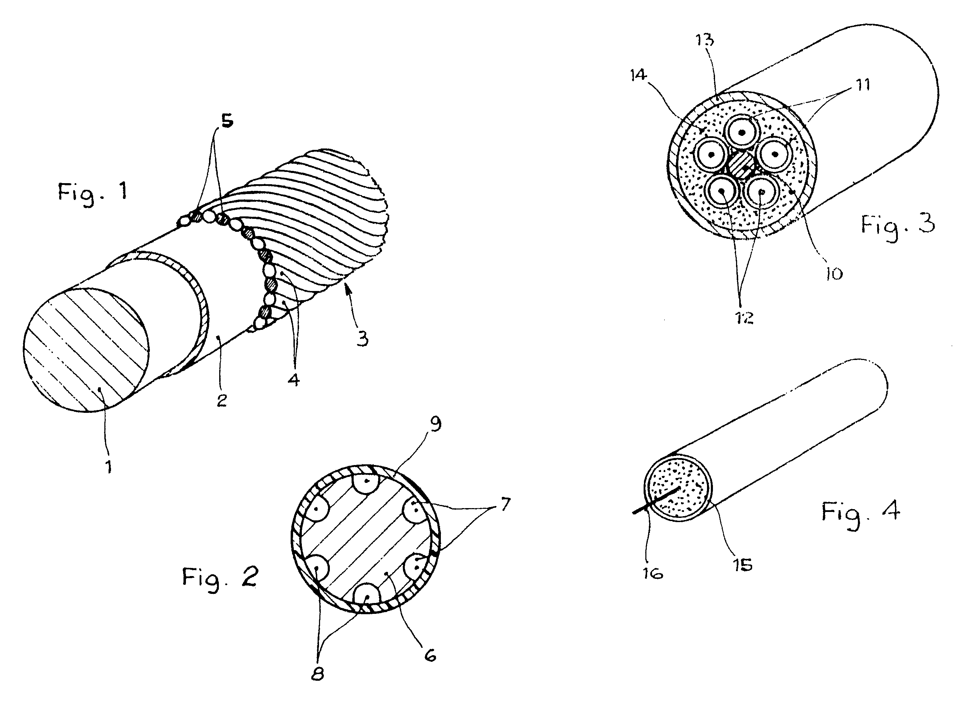

In FIG. 1, a cable according to the invention is shown.

The cable of FIG. 1, comprises a transmissive unit 1 - that can be the core of any whatsoever optical fibres cable.

The transmissive unit 1, in enclosed in a metallic or plastic sheath 2, around which an armouring 3 is disposed.

The armouring 3, is formed by a plurality of metallic wires 4 for example steel, between which are inserted structural shapes or threads 5, formed by, or containing an absorbent hydrogen composition according to the invention. Preferably but not necessarily, between two adjacent metallic wires 4, there is interposed a structural shape or thread 5 - of the type defined above.

According to an alternative embodiment (not shown) of the cable shown in FIG. 1, the structural shapes, or threads 5, are lacking, and at least some of the wires 4, are covered with a layer of the absorbent hydrogen composition, according to the invention.

According to another alternative embodiment (not shown), for the cable of FIG. 1, the armouring 3 - is formed exclusively by bare metallic wires 4 and the sheath 2 is lined by a covering - either of a material having the absorbent hydrogen composition, according to the invention, or by a plastic compound that contains, as a component, an absorbent hydrogen composition, according to the invention.

For example, and just by way of non-limiting example, the transmissive unit 1, can be the one illustrated in FIG. 2 - without excluding that this latter could form an optical-fibres cable, on its own.

As is seen in FIG. 2, the core is comprised by a cylindrical, plastic structural shape 6 that is provided, on its outer surface, with a plurality of grooves 7 that extend longitudinally to the structural shape and which have a helicoidal - either closed-helix or open-helix configuration.

In each groove 7, there is housed at least one optical fibre 8 that is provided either with a loose, or a tight protection.

Around the structural shape 6, there is disposed a covering 9 - which closes the grooves outwardly.

The covering 9 can be formed by windings of plastic tapes - or, as an alternative, by a layer of extruded plastic material.

In the cable of FIG. 1 - when the transmissive unit 1, is the one shown in FIG. 2, then an optical fibres cable - provided with a metallic mechanically-resistent armouring outside the sheath 2 of the cable itself, is had.

Even for this type of optical fibres cables - as well as for the one of FIG. 2, the essential element according to the invention, is to incorporate into its structure, an absorbent hydrogen composition, according to the invention, for protecting the optical fibres disposed inside the cable, from absorbing hydrogen.

For protecting the optical fibres of a cable from absorbing the hydrogen - that is either originated inside the cable, or that comes from the environment outside this latter, it is sufficient for an absorbent hydrogen composition, according to the invention, to be disposed near the optical-fibres - at a distance of not over 1 cm and preferably, so as to at least partially surround the optical fibres.

Preferably, for protecting the optical fibres - even from the hydrogen originated inside the cable, a filler - such as, for example, a viscous fluid containing, in opportune quantities, an absorbent hydrogen composition, according to the invention, is preferably present inside the grooves 7 without this fact being taken as a limiting condition for the invention.

As an alternative, or in addition, the plastic structural shape 6 or the covering 9 or both, can be formed by an absorbent hydrogen composition according to the invention - or else, they can be formed by a compound made of plastic materials which contain an absorbent hydrogen composition according to the invention.

In FIG. 3, there is shown - purely by way of non-limiting example, an other optical fibres cable according to the invention, which is devoid of a metallic armouring surrounding the sheath.

As can be seen in FIG. 3, the cable presents - in correspondence of its own longitudinal axis, an element 10 that is comprised, for example, of a plastic structural shape eventually embedding a traction-resistent element or else a metallic rope.

Around the element 10, there are disposed - circumferentially and equidistanced, a plurality of tubes 11 - in each one of which there is loosely housed at least one optical fibre 12.

The tubes 11-element 10 unit, is enclosed in a plastic or a metallic sheath 13, and any void space that is left in-between said materials and the above-cited unit, is filled with a plastic filler 14.

In the above-described cable of FIG. 3, either one, some, or all of the component elements, with the obvious exception of the optical fibres and of any eventual metallic-reinforcements foreseen in them, can be formed or be comprised by an absorbent hydrogen composition according to the invention.

For example, when the element 10 has the form of a plastic structural-shape, it comprises a composition according to the invention.

As an alternative or in addition, if the tubes 11 are made of plastic, they are formed - or includes an absorbent hydrogen composition in the compound out of which they are made.

According to further alternative embodiment or in addition to it, the filler 14 can be comprised of a pasty compound, of a powder, or of granules made from a composition according to the invention.

Furthermore, inside the tubes 11 a filler can be present (such as, for example, in the form of a fluid - even a viscous fluid, powders, granules, or even of a mass of plastic) comprising an absorbent hydrogen composition according to the invention.

Of course, the cable represented in FIG. 3, can constitute the transmissive unit 1 of the cable of FIG. 1; in this case, the armouring 3 can be omitted.

Moreover, what comes into the ambit of the present invention are also cable components - when they incorporate an absorbent hydrogen composition.

In FIG. 4 a component for optical-fibres cables is illustrated - without however, excluding the fact that this component (or an assembly of said components) can form, by themselves, an optical fibres cable. As is seen in FIG. 4, the component is constituted by a plastic or metallic tube 15, inside which an optical-fibre 16 is loosely housed. All the space inside the tube is filled with a filler - comprised by an absorbent hydrogen fluid composition, that can even be viscous.

If made of plastic, the tube can also be made out of a solid absorbent hydrogen composition according to the invention, or else, made of a plastic compound containing these compositions.

Another component for cables according to the invention, is constituted by a structural shape - made of a solid absorbent hydrogen composition, according to the invention, or of a component containing said composition - to be associated with the structure of the cable.

Examples of said structural-shapes are those marked with the reference numerals 5, 6 and 10 respectively - in FIGS. 1, 2 and 3.

A further optical fibres cable component according to the invention, is a filler - either in a liquid (even viscous) form, or else, in the form of powders, or granules - all formed out of an absorbent hydrogen composition, or containing said composition.

Although some embodiments, according to the invention, have been illustrated and described, what are also intended as being comprised within its ambit are all those alternative variations that are accessible to the one skilled in the art.

## Claims

1. Hydrogen absorbing composition for optical fibres cables and their components, formed by a mixture that comprises an unsaturated polymer, characterised in that the unsaturated polymer is selected from:
   - unsaturated homopolymers obtained through the polymerisation of monomers selected from butadiene, pentadiene, methylbutadiene and 2-chlorobutadiene;

9

- unsaturated copolymers or terpolymers obtained through the polymerisation between a first monomer, selected from butadiene, pentadiene, methylbutadiene and 2-chlorobutadiene, and a second monomer, or second and third monomers, selected from styrene, 4-vinylpyridine and acrylonitrile; and
- unsaturated polymers obtained by grafting to the unsaturated homopolymers or to the unsaturated copolymers or terpolymers, monomers containing at least one unsaturated group, selected from vinyl, allyl, and mixtures thereof, said monomers containing at least one unsaturated group after the grafting step;

and the mixture comprises further a catalyst selected from palladium powder, platinum powder, iron pentacarbonyl, copper chromite and mixtures of two or more thereof, by itself or supported by inert materials.

2. Composition according to claim 1 characterised in that the unsaturated homopolymer has all the component monomers which are linked to one another at the 1 and 4 positions.

3. Composition according to claim 1 characterised in that the unsaturated homopolymer has all the component monomers which are linked to one another at the 1 and 2 positions.

4. Optical fibres cable, having at least one mechanically resistant component (3), and comprising a transmissive unit (1) and a sheath (2) enclosing the transmissive unit, characterised by the fact of incorporating an unsaturated polymeric composition made from a mixture comprising an unsaturated polymer selected from:
   - unsaturated homopolymers obtained through the polymerisation of monomers selected from butadiene, pentadiene, methylbutadiene and 2-chlorobutadiene;
   - unsaturated copolymers or terpolymers obtained through the polymerisation between a first monomer, selected from butadiene, pentadiene, methylbutadiene and 2-chlorobutadiene, and a second monomer, or second and third monomers, selected from styrene, 4-vinylpyridine and acrylonitrile; and
   - unsaturated polymers obtained by grafting to the unsaturated homopolymers or to the unsaturated copolymers or terpolymers, monomers containing at least one unsaturated group, selected from the group consisting of vinyl, allyl and mixtures thereof, said monomers containing at least one unsaturated group after the grafting step;

and a catalyst selected from palladium powder, platinum powder, iron pentacarbonyl, copper chromite and mixtures of two or more thereof, by itself or supported by inert materials.

5. Cable, according to claim 4, wherein the mechanically-resistant component is a metallic armouring outside of the sheath which encloses the transmissive unit, characterized by the fact that at least one structural shape, made of a polymeric compound wherein the unsaturated polymeric composition is incorporated, is adjacent to the components of the metallic armouring.

6. Cable, according to claim 4, wherein the mechanically-resistant component is a metallic armouring outside the sheath which encloses the transmissive unit, characterized by the fact that a covering made of a polymeric compound, containing at least the unsaturated polymeric composition, covers at least some components of the metallic armouring of the cable.

7. Cable, according to claim 4, wherein the mechanically resistant component is the metallic sheath that encloses the transmissive unit, characterized by the fact that a covering, of a polymeric compound containing at least the unsaturated polymeric composition, lines the sheath.

8. Cable, according to claim 4, characterized by the fact that the unsaturated polymeric composition is placed near the optical fibre, at a distance of not over 1 cm.

9. Cable, according to claim 8, characterized by the fact that the unsaturated polymeric composition, disposed in the vicinity of the optical fibres, at least partially surrounds these latter.

10. Cable, according to claim 9, characterized by the fact that the unsaturated polymeric composition surrounding the optical fibres, is at least a component of a filler for the cable.

11. Cable, according to claim 9, characterized by the fact that the unsaturated polymeric composition which surrounds the optical fibres, is at least a component of a plastic compound, out of which a tube is formed that loosely houses the said optical fibres, even singly.

12. Cable, according to claim 4, characterized by the fact that said transmissive unit comprises, in a central position, at least one structural shape made of a plastic compound of which at least the unsaturated polymeric composition is a component.

13. Optical-fibres cable component, incorporating a hydrogen absorbent composition formed by a mixture that comprises an unsaturated polymer, characterised in that the unsaturated polymer is selected from:
    - unsaturated homopolymers obtained through the polymerisation of monomers selected from butadiene, pentadiene, methylbutadiene and 2-chlorobutadiene;
    - unsaturated copolymers or terpolymers obtained through the polymerisation between a first monomer, selected from butadiene, pentadiene, methylbutadiene and 2-chlorobutadiene, and a second monomer, or second and third monomers, selected from styrene, 4-vinylpyridine and acrylonitrile; and
    - unsaturated polymers obtained by grafting to the unsaturated homopolymers or to the unsaturated copolymers or terpolymers, monomers containing at least one unsaturated group, selected from vinyl, allyl, and mixtures thereof, said monomers containing at least one unsaturated group after the grafting step;
    and the mixture comprises further a catalyst selected from palladium powder, platinum powder, iron pentacarbonyl, copper chromite and mixtures of two or more thereof, by itself or supported by inert materials.

14. Optical fibres cable component, according to claim 13, characterized by the fact of consisting of a plastic structural shape that incorporates at least the hydrogen absorbent composition.

15. Optical fibres cable component, according to claim 14, characterized by the fact that the structural shape is a tube, inside which at least one optical fibre is housed.

16. Optical fibres cable component, according to claim 13, constituted by a filler in the form of powders and/or of a fluid - even viscous, characterized by the fact of comprising the hydrogen absorbing composition.

## Revendications

1. Composition absorbant de l'hydrogène, destinée à des câbles de fibres optiques et à leurs composants, formée par un mélange qui comprend un polymère non saturé, caractérisée en ce que le polymère non saturé est choisi parmi:
    - des homopolymères non saturés obtenus au moyen de la polymérisation de monomères choisis parmi le butadiène, le pentadiène, le méthylbutadiène et le chloro-2-butadiène;
    - des copolymères ou des terpolymères non saturés obtenus au moyen de la polymérisation entre un premier monomère, choisi parmi le butadiène, le pentadiène, le méthylbutadiène et le chloro-2-butadiène, et un deuxième monomère, ou un deuxième et un troisième monomères, choisis parmi le styrène, la vinyl-4-pyridine et l'acrylonitrile; et
    - des polymères non saturés obtenus en greffant sur les homopolymères non saturés ou les copolymères ou terpolymères non saturés, des monomères contenant au moins un groupe non saturé, choisi parmi le vinyle, l'allyle et des mélanges de ceux-ci, lesdits monomères contenant au moins un groupe non saturé après l'étape de greffage;
    et le mélange comprend en outre un catalyseur choisi parmi la poudre de palladium, la poudre de platine, le fer penta-carbonyle, la chromite de cuivre et des mélanges de deux d'entre eux ou davantage, seul ou supporté par des matières inertes.

2. Composition selon la revendication 1, caractérisée en ce que, dans l'homopolymère non saturé, tous les monomères composants sont liés l'un à l'autre aux positions 1 et 4.

3. Composition selon la revendication 1, caractérisée en ce que, dans l'homopolymère non saturé, tous les monomères composants sont liés l'un à l'autre aux positions 1 et 2.

4. Câble à fibres optiques, comportant au moins un composant mécaniquement résistant (3), et comprenant un ensemble de transmission (1) et une gaine (2) enfermant l'ensemble de transmission, caractérisé par le fait qu'il incorpore une composition polymère non saturée réalisée à partir d'un mélange comprenant un polymère non saturé choisi parmi:

- des homopolymères non saturés obtenus au moyen de la polymérisation de monomères choisis parmi le butadiène, le pentadiène, le méthylbutadiène et le chloro-2-butadiène;
- des copolymères ou des terpolymères non saturés obtenus au moyen de la polymérisation entre un premier monomère, choisi parmi le butadiène, le pentadiène, le méthylbutadiène et le chloro-2-butadiène, et un deuxième monomère, ou un deuxième et un troisième monomères, choisis parmi le styrène, la vinyl-4-pyridine et l'acrylonitrile; et
- des polymères non saturés obtenus en greffant sur les homopolymères non saturés ou les copolymères ou terpolymères non saturés, des monomères contenant au moins un groupe non saturé, choisi dans le groupe formé par le vinyle, l'allyle et des mélanges de ceux-ci, lesdits monomères contenant au moins un groupe non saturé après l'étape de greffage;

et un catalyseur choisi parmi la poudre de palladium, la poudre de platine, le fer penta-carbonyle, la chromite de cuivre et des mélanges de deux d'entre eux ou davantage, seul ou supporté par des matières inertes.

5. Câble, selon la revendication 4, dans lequel le composant mécaniquement résistant est un blindage métallique situé à l'extérieur de la gaine qui enferme l'ensemble de transmission, caractérisé par le fait qu'au moins une forme structurelle, constituée d'un composé polymère dans laquelle est incorporée la composition polymère non saturée, est adjacent aux composants du blindage métallique.

6. Câble, selon la revendication 4, dans lequel le composant mécaniquement résistant est un blindage métallique situé à l'extérieur de la gaine qui enferme l'ensemble de transmission, caractérisé par le fait qu'un revêtement constitué d'un composé polymère, contenant au moins la composition polymère non saturée, recouvre au moins certains composants de blindage métallique du câble.

7. Câble, selon la revendication 4, dans lequel le composant mécaniquement résistant est la gaine métallique qui enferme l'ensemble de transmission, caractérisé par le fait qu'un revêtement, en un composé polymère contenant au moins la composition polymère non saturée, forme un chemisage pour la gaine.

8. Câble, selon la revendication 4, caractérisé par le fait que la composition polymère non saturée est placée près de la fibre optique, à une distance ne dépassant pas 1 cm.

9. Câble, selon la revendication 8, caractérisé par le fait que la composition polymère non saturée, disposée au voisinage des fibres optiques, entoure au moins partiellement ces dernières.

10. Câble, selon la revendication 9, caractérisé par le fait que la composition polymère non saturée entourant les fibres optiques est au moins un composant d'une matière de charge destinée au câble.

11. Câble, selon la revendication 9, caractérisé par le fait que la composition polymère non saturée qui entoure les fibres optiques est au moins un composant d'un composé plastique dont est formé un tube qui loge de façon lâche lesdites fibres optiques, même de façon unique.

12. Câble, selon la revendication 4, caractérisé par le fait que ledit ensemble de transmission comprend, dans une position centrale, au moins une forme structurelle constituée d'un composé plastique dont la composition polymère non saturée est au moins un composant.

13. Composant de câble à fibres optiques, incorporant une composition absorbant de l'hydrogène formée par un mélange qui comprend un polymère non saturé, caractérisé en ce que le polymère non saturé est choisi parmi:

- des homopolymères non saturés obtenus au moyen de la polymérisation de monomères choisis parmi le butadiène, le pentadiène, le méthylbutadiène et le chloro-2-butadiène;
- des copolymères ou des terpolymères non saturés obtenus au moyen de la polymérisation entre un premier monomère, choisi parmi le butadiène, le pentadiène, le méthylbutadiène et le chloro-2-butadiène, et un deuxième monomère, ou un deuxième et un troisième monomères, choisis parmi le styrène, la vinyl-4-pyridine et l'acrylonitrile; et

- des polymères non saturés obtenus en greffant sur les homopolymères non saturés ou les copolymères ou terpolymères non saturés, des monomères contenant au moins un groupe non saturé, choisi parmi le vinyle, l'allyle et des mélanges de ceux-ci, lesdits monomères contenant au moins un groupe non saturé après l'étape de greffage;

et le mélange comprend en outre un catalyseur choisi parmi la poudre de palladium, la poudre de platine, le fer penta-carbonyle, la chromite de cuivre et des mélanges de deux d'entre eux ou davantage, seul ou supporté par des matières inertes.

14. Composant de câble à fibres optiques selon la revendication 13, caractérisé par le fait qu'il consiste en une forme structurelle en matière plastique qui incorpore au moins la composition absorbant l'hydrogène.

15. Composant de câble à fibres optiques selon la revendication 14, caractérisé par le fait que la forme structurelle est un tube, à l'intérieur duquel est logée au moins une fibre optique.

16. Composant de câble à fibres optiques selon la revendication 13, constitué par une matière de charge en forme de poudres et/ou d'un fluide - même visqueux, caractérisé par le fait qu'il comprend la composition absorbant l'hydrogène.

## Patentansprüche

1. Wasserstoff absorbierende Zusammensetzung für optische Faserkabel und deren Komponenten, gebildet durch ein Gemisch, welches ein ungesättigtes Polymer umfaßt,
   **dadurch gekennzeichnet,** daß das ungesättigte Polymer ausgewählt ist aus
   - ungesättigten Homopolymeren, die erhalten sind durch Polymerisation von Monomeren, die ausgewählt sind aus Butadien, Pentadien, Methylbutadien und 2-Chlorbutadien;
   - ungesättigten Copolymeren oder Terpolymeren, die erhalten sind durch Polymerisation zwischen einem ersten Monomer, ausgewählt aus Butadien, Pentadien, Methylbutadien und 2-Chlorbutadien, und einem zweiten Monomer oder einem zweiten und einem dritten Monomer, ausgewählt aus Styrol, 4-Vinylpyridin und Acrylnitril; und
   - ungesättigten Polymeren, die erhalten sind durch Aufpfropfen von Monomeren auf die ungesättigten Homopolymere oder auf die ungesättigten Copolymere oder Terpolymere, wobei die Monomere wenigstens eine ungesättigte Gruppe enthalten, ausgewählt aus Vinyl, Allyl und Gemischen davon, und wobei die Monomere nach dem Aufpfropfen wenigstens eine ungesättigte Gruppe enthalten,
   und das Gemisch weiterhin einen Katalysator enthält, ausgewählt aus Palladiumpulver, Platinpulver, Eisenpentacarbonyl, Kupferchromit und Gemischen von zwei oder mehreren dieser, das Material als solches oder durch inerte Materialien getragen vorliegt.

2. Zusammensetzung nach Anspruch 1, dadurch gekennzeichnet, daß das ungesättigte Homopolymer alle die Komponentenmonomere hat, die an der ersten und der vierten Position miteinander verbunden sind.

3. Zusammensetzung nach Anspruch 1, dadurch gekennzeichnet, daß das ungesättigte Homopolymer alle die Komponentenmonomere hat, die an der ersten und der zweiten Position miteinander verbunden sind.

4. Optisches Faserkabel mit wenigstens einer mechanisch widerstandsfähigen Komponente (3) und umfassend eine Übertragungseinheit (1) und einen diese Einheit umschließenden Mantel (2), dadurch gekennzeichnet, daß eine ungesättigte polymere Zusammensetzung eingelagert ist, gebildet aus einem Gemisch, welches ein ungesättigtes Polymer umfaßt, ausgewählt aus
   - ungesättigten Homopolymeren, die erhalten sind durch Polymerisation von Monomeren, ausgewählt aus Butadien, Pentadien, Methylbutadien und 2-Chlorbutadien;
   - ungesättigten Copolymeren oder Terpolymeren, die erhalten sind durch Polymerisation zwischen einem ersten Monomer, ausgewählt aus Butadien, Pentadien, Methylbutadien und 2-Chlorbutadien, und einem zweiten Monomer oder einem zweiten und einem dritten Monomer, ausgewählt aus Styrol, 4-Vinyl-pyridin und Acrylnitril; und

- ungesättigten Polymeren, die erhalten sind durch Aufpfropfen von Monomeren auf die ungesättigten Homopolymere oder auf die ungesättigten Copolymere oder Terpolymere, wobei die Monomere wenigstens eine ungesättigte Gruppe enthalten, ausgewählt aus Vinyl, Allyl und Gemischen davon, und wobei die Monomere nach dem Aufpfropfen wenigstens eine ungesättigte Gruppe enthalten;
und einem Katalysator, ausgewählt aus Palladiumpulver, Platinpulver, Eisenpentacarbonyl, Kupferchromit und Gemischen von zwei oder mehreren dieser, wobei das Material als solches oder durch inertes Material getragen vorliegt.

5. Kabel nach Anspruch 4, wobei die mechanisch widerstandsfähige Komponente eine Metallbewehrung auf der Außenseite des Mantels ist, der die Übertragungseinheit umschließt, dadurch gekennzeichnet, daß wenigstens ein Strukturprofilteil, der aus einer polymeren Masse gebildet ist, in welche die ungesättigte polymere Zusammensetzung eingelagert ist, nahe den Komponenten der Metallbewehrung vorgesehen ist.

6. Kabel nach Anspruch 4, wobei die mechanisch widerstandsfähige Komponente eine Metallbewehrung auf der Außenseite des Mantels ist, welche die Übertragungseinheit umschließt, dadurch gekennzeichnet, daß eine Abdeckung aus einer polymeren Masse, welche wenigstens die ungesättigte polymere Zusammensetzung enthält, wenigstens gewisse Komponenten der Metallbewehrung des Kabels bedeckt.

7. Kabel nach Anspruch 4, wobei die mechanisch widerstandsfähige Komponente der Metallmantel ist, welcher die Übertragungseinheit umschließt, dadurch gekennzeichnet, daß eine Abdeckung aus einer polymeren Masse, die wenigstens die ungesättigte polymere Zusammensetzung enthält, den Mantel verkleidet.

8. Kabel nach Anspruch 4, dadurch gekennzeichnet, daß die ungesättigte polymere Zusammensetzung nahe der optischen Faser in einem Abstand von nicht größer als 1 cm angeordnet ist.

9. Kabel nach Anspruch 8, dadurch gekennzeichnet, daß die ungesättigte polymere Zusammensetzung, die in der Nähe der optischen Fasern angeordnet ist, die letzteren wenigstens teilweise umgibt.

10. Kabel nach Anspruch 9, dadurch gekennzeichnet, daß die ungesättigte polymere Zusammensetzung, welche die optischen Fasern umgibt, wenigstens eine Komponente eines Füllers für das Kabel ist.

11. Kabel nach Anspruch 9, dadurch gekennzeichnet, daß die ungesättigte polymere Zusammensetzung, welche die optischen Fasern umgibt, wenigstens eine Komponente einer plastischen Masse oder Kunststoffmasse ist, aus welcher ein Schlauch oder Rohr gebildet ist, welcher bzw. welches die optischen Fasern, auch einzeln, lose aufnimmt.

12. Kabel nach Anspruch 4, dadurch gekennzeichnet, daß die Übertragungseinheit in einer mittleren Position wenigstens einen Strukturprofilteil hat, der aus einer plastischen Masse oder Kunststoffmasse gebildet ist, von welcher wenigstens die ungesättigte polymere Zusammensetzung eine Komponente ist.

13. Optische Faserkabelkomponente, umfassend eine Wasserstoff absorbierende Zusammensetzung, die gebildet ist durch ein Gemisch, welches ein ungesättigtes Polymer umfaßt, dadurch gekennzeichnet, daß das ungesättigte Polymer ausgewählt ist aus
- ungesättigten Homopolymeren, die erhalten sind durch Polymerisation von Monomeren, ausgewählt aus Butadien, Pentadien, Methylbutadien und 2-Chlorbutadien;
- ungesättigten Copolymeren oder Terpolymeren, die erhalten sind durch Polymerisation zwischen einem ersten Monomer, ausgewählt aus Butadien, Pentadien, Methylbutadien und 2-Chlorbutadien, und einem zweiten Monomer oder einem zweiten und einem dritten Monomer, ausgewählt aus Styrol, 4-Vinylpyridin und Acrylnitril; und
- ungesättigten Polymeren, die erhalten sind durch Aufpfropfen von Monomeren auf die ungesättigten Homopolymere oder die ungesättigten Copolymere oder Terpolymere, wobei die Monomere wenigstens eine ungesättigte Gruppe enthalten, ausgewählt aus Vinyl, Allyl und Gemischen dieser, und wobei die Monomere nach dem Aufpfropfen wenigstens eine ungesättigte Gruppe

14

enthalten;

und das Gemisch weiterhin einen Katalysator umfaßt, ausgewählt aus Palladiumpulver, Platinpulver, Eisenpentacarbonyl, Kupferchromit und Gemischen von zwei oder mehreren dieser, wobei das Material als solches oder durch inerte Materialien getragen vorliegt.

14. Optische Faserkabelkomponente nach Anspruch 13, dadurch gekennzeichnet, daß sie aus einem plastischen oder Kunststoff-Strukturprofilteil besteht, der wenigstens die Wasserstoff absorbierende Zusammensetzung einlagert hat.

15. Optische Faserkabelkomponente nach Anspruch 14, dadurch gekennzeichnet, daß der Strukturprofilteil ein Rohr oder ein Schlauch ist, in welchem wenigstens eine optische Faser aufgenommen ist.

16. Optische Faserkabelkomponente nach Anspruch 13, dargestellt durch einen Füller in Form von Pulvern und/oder eines gegebenenfalls viskosen Fluids, dadurch gekennzeichnet, daß sie die Wasserstoff absorbierende Zusammensetzung umfaßt.

Fig. 1

Fig. 2

Fig. 3

Fig. 4

EP 0 200 914 B1